# EUROPEAN PATENT APPLICATION

(11) **EP 3 059 287 A1**
(43) Date of publication of application: **24.08.2016**
(21) Application number: 14854685.6
(22) Date of filing: 16.10.2014
(51) Int. Cl.: C08L 97/00, C08K 3/00, C08L 1/02, C08L 7/00, C08L 9/00, C08L 61/06, C08L 61/14

(54) **RESIN COMPOSITION, RUBBER COMPOSITION AND CURED ARTICLE**

(30) Priority: 16.10.2013 JP 2013215144
(71) Applicant: Sumitomo Bakelite Co., Ltd., Shinagawa-ku Tokyo 140-0002 (JP)
(72) Inventor: MURAI, Taketoshi, Tokyo 140-0002 (JP)
(74) Representative: Ter Meer Steinmeister & Partner
(86) International application number: PCT/JP2014/077607
(87) International publication number: WO 2015/056757

(57) **Abstract**

A resin composition having improved mechanical strength, hardness, and low heat generation property (low fuel consumption property) is developed, and when the same is used particularly in a rubber composition, a rubber composition that has a low tanδ (loss tangent) around 60°C, an improved E' (storage elastic modulus), and a reduced load on the environment is provided. A resin composition containing a lignin derivative (A), as well as either a modified novolac type phenol resin (B) or a cashew resin (B'), is provided. In one or a plurality of embodiments, the modified novolac type phenol resin (B) has a softening point of 150°C or lower, and the modified novolac type phenol resin (B) is obtained by modification with a plant-derived compound.

## Description

### Technical Field

The present invention relates to a resin composition, a rubber composition, and a cured article.

### Background Art

Most of wood-based waste materials (biomass) such as barks, thinnings, and construction waste materials have been disposed of so far. The protection of the global environment, however, has become an important issue, and from this viewpoint, studies have started regarding reuse and recycle of wood-based waste materials.

Principal components of common woods are cellulose derivatives, hemicellulose derivatives, and lignin derivatives.

Among these, lignin, which is contained at a ratio of about 30 %, has a structure containing aromatic rings plentifully, and hence, resin compositions and rubber compositions in which lignin is used as a resin raw material have been disclosed (see, for example, Patent Documents 1 and 2).

Further, as the lignin derivatives have a structure containing a phenolic hydroxyl group and an alcoholic hydroxyl group plentifully, resin compositions and rubber compositions in which lignin derivatives are used as a tackifier and an antioxidant have been disclosed (see, for example, Patent Document 3). Still further, the same are expected to exhibit high performance as a reinforcer for rubber compositions.

### Prior Art Document

### Patent Document

[Patent Document 1] JP-T-2011-522085
[Patent Document 2] JP-A-2008-285626
[Patent Document 3] JP-T-2012-229330

### SUMMARY OF THE INVENTION

### Problem to be Solved by the Invention

In a case where, however, a lignin derivative is dissolved in black liquor containing sodium hydroxide and sodium sulfide, and the lignin derivative is collected from the black liquor in which the lignin derivative is dissolved, a rubber composition in which the obtained lignin derivative is formulated has a reduced mechanical strength (see, for example, Patent Document 1).

Further, in a case of lignophenol to which phenol obtained by treating phenol and concentrated sulfuric acid is added, a cured article of the same contains a lot of sulfuric acid ions remaining therein. Mechanical strength and long term reliability of a rubber composition, therefore, may possibly decrease, and when the rubber composition is cured at a high temperature, discoloration and generation of toxic gas occur in some cases. It is possible to purify the same, but it may possibly cost too high (see, for example, Patent Document 2).

Patent Document 2 discloses systems in which various lignophenol derivatives are used, but the systems do not have sufficient properties as a rubber composition.

These lignins do not have hot melt properties in some cases, and in such a case, the lignins are not dispersed appropriately during rubber kneading, which results in that rubber physical properties of the rubber composition do not improve sufficiently (see Patent Documents 1 and 2).

In this way, in the case of a cured article of a rubber composition obtained by using a lignin derivative, particularly, a lignin derivative to which phenol is added, the mechanical strength, the hardness, and the low heat generation property (low fuel consumption property) are hardly improved, and further, there is a risk that the appearance is impaired.

It is an object of the present invention to develop a resin composition having improved mechanical strength, hardness, and low heat generation property (low fuel consumption property), with the above-described problems being solved; and particularly, to provide a rubber composition in which the resin composition is used so that the rubber composition has a low tanδ (loss tangent) around 60°C, an improved E' (storage elastic modulus), and a reduced load on the environment.

### Means for Solving the Problem

The present invention is as follows:
(1) A resin composition containing a lignin derivative (A), and either a modified novolac type phenol resin (B) or a cashew resin (B');
(2) The resin composition according to (1), wherein the modified novolac type phenol resin (B) has a softening point of 150°C or lower;
(3) The resin composition according to (1) or (2), wherein the cashew resin (B') has a softening point of 150°C or lower;.
(4) The resin composition according to any one of (1) to (3), wherein the modified novolac type phenol resin (B) is obtained by modification with a plant-derived compound;
(5) The resin composition according to any one of (1) to (4), wherein the plant-derived compound contains at least one of tung oil, linseed oil, tall oil, and cashew oil;
(6) The resin composition according to (1), wherein the lignin derivative (A) has a number average molecular weight of 200 to 5000 expressed in terms of polystyrene, determined by gel permeation chromatography (GPC) analysis;
(7) The resin composition according to (1) or (2), wherein the lignin derivative (A) has a softening point of 160°C or lower;
(8) A rubber composition containing: a lignin derivative (A); at least one selected from the group consisting of a modified novolac type phenol resin (B), a cashew resin (B'), and an unmodified novolac type phenol resin (B"); and a natural rubber compound and/or a diene-based synthetic rubber compound (D);
(9) The rubber composition according to (8), wherein a content of the natural rubber and/or diene-based synthetic rubber (D) is 100 to 10000 parts by weight with respect to 100 parts by weight of the lignin derivative (A);
(10) The rubber composition according to (8) or (9), further containing a filler (C);
(11) The rubber composition according to any one of (8) to (10), wherein the filler (C) contains one or more selected from the group consisting of at least carbon black, silica, alumina, and cellulose fiber; and
(12) A cured article obtained by curing the rubber composition according to any one of (8) to (11).

### Effect of the Invention

According to the present invention, with a resin composition that contains a lignin derivative (A), as well as at least one selected from the group consisting of a modified novolac type phenol resin (B), a cashew resin (B'), and an unmodified novolac type phenol resin (B"), it is possible to provide a rubber composition that has an improved hardness and a low tanδ around 60°C, as well as excellent elongation at break and breaking strength that are characteristic of lignin, and further, a reduced load on the environment.

### Mode for Carrying out the Invention

The resin composition of the present invention contains: a lignin derivative (A); and at least one selected from the group consisting of a modified novolac type phenol resin (B) and a cashew resin (B'). The lignin derivative used in the present invention is typically a lignin derivative a part of which is hydrolyzed at a high temperature or under conditions of a high temperature and a high pressure in the presence of water. In the present invention, with use of the resin composition containing the lignin derivative (A) and the modified novolac type phenol resin (B), it is possible to increase the hardness of the rubber composition, without reducing the elongation at break and breaking strength, and to significantly reduce tanδ, particularly tanδ around 60°C.

Further, in the present invention, the following can be used: the lignin derivative (A); at least one selected from the group consisting of the modified novolac type phenol resin (B), the cashew resin (B'), and the unmodified novolac type phenol resin (B"); at least either a natural rubber compound or a diene-based synthetic rubber compound (C); and further, a filling material (D). A cured article of the rubber composition thus obtained has a reduced tanδ (loss tangent) around 60°C, and an improved E' (storage elastic modulus). Still further, with the cured article of the rubber composition, a rubber composition that excels in durability and low heat generation property (low fuel consumption property) can be manufactured.

Hereinafter, the components of the resin composition are described one by one.

### <Lignin derivative (A)>

First of all, the lignin derivative (A) is described. Lignin is a principal component that forms a skeleton of a plant body together with cellulose and hemicellulose, and is one of substances that exist most abundantly in the natural world. A lignin derivative is a compound that includes a phenol derivative as a unit structure, and since having a carbon-carbon bond or a carbon-oxygen -carbon bond, which is chemically and biologically stable, this unit structure is hardly subjected to chemical deterioration or biodegradation. A lignin derivative, therefore, is useful as a resin raw material.

The lignin derivative (A) used in the present invention is obtained by decomposition of biomass. A biomass, which is a plant or a plant finished product, is formed by taking in carbon dioxide in the atmosphere and fixing the same in the photosynthesis process, and therefore contributes to suppression of increase of carbon dioxide in the atmosphere. Industrial utilization of biomass, therefore, contributes to suppression of global warming.

Examples of a treatment method used in the present invention for decomposing a biomass so as to obtain the lignin derivative (A) include the following: the method of chemically treating a plant or a plant finished product; the method of hydrolyzing the same; the methods of treating the same by steam blasting, the supercritical water treatment, the subcritical water treatment, mechanical processing, and the cresol sulfate treatment; and the methods of obtaining the lignin derivative (A)as by-products in the pulp production and the biofuel production. From the viewpoint of load on the environment, the steam blasting, the supercritical water treatment, the subcritical water treatment, and the mechanically processing are preferable. From the viewpoint of purity of the lignin derivative obtained, the steam blasting, and the subcritical water treatment are further preferable.

Specific examples of the lignin derivative (A) include those of: a guaiacylpropane structure represented by Formula (1) shown below; a syringylpropane structure represented by Formula (2) shown below: and a 4-hydroxy phenyl propane structure represented by Formula (3) shown below. It should be noted that from coniferous trees, those of the guaiacylpropane structure are principally extracted; from broadleaf trees, those of the guaiacylpropane structure and the syringylpropane structure are principally extracted; from hervage, those of the guaiacylpropane structure, the syringylpropane structure, and the 4-hydroxy phenyl propane structure are principally extracted.

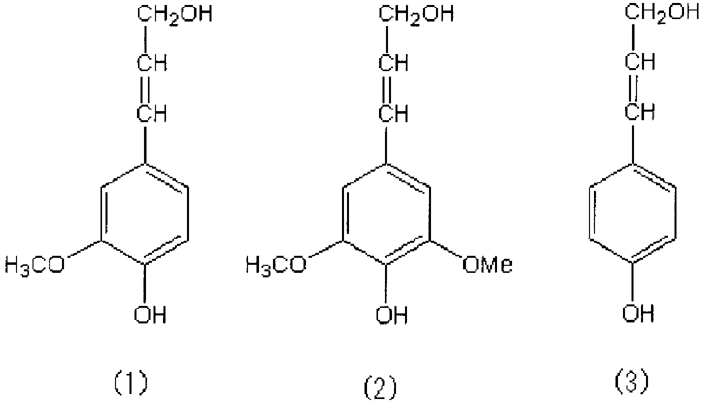

Further, as the lignin derivative in the present invention, those in which at least one of the ortho position and the para position of the aromatic ring with respect to the hydroxyl group is unsubstituted are preferable.. Such a lignin derivative includes many reaction sites on which a curing agent acts due to an electrophilic substitution reaction with respect to the aromatic ring, which reduces steric hindrance in reaction at a hydroxyl group; therefore, the lignin derivative has excellent reactivity.

Here, the lignin derivative, containing a compound having a lignin skeleton as a principal component, may contain a lignin decomposition product, a cellulose decomposition product, and a hemicellulose decomposition product.

Further, other than the above-described basic structure, the lignin derivative (A) may be a lignin derivative having a functional group (a lignin secondary product).

The functional group that the lignin secondary product has is not limited particularly, but for example, two or more same functional groups that react with each other, or a functional group that can react with another functional group are preferable. More specifically, examples of such a functional group include, other than the epoxy group and the methylol group, the following: vinyl group, ethynyl group, maleimide group, cyanate group, isocyanate group, and the like, having a carbon-carbon unsaturated bond. Among these, a lignin derivative to which a methylol group is introduced (methylolated) is preferably used. In such a lignin secondary product, self-crosslinking occurs due to self-condensation reaction between methylol groups, and at the same time, crosslinking further occurs with respect to an alkoxy methyl group and a hydroxyl group in a crosslinking agent described below. Consequently, a cured article having a particularly homogeneous and rigid skeleton and excellent solvent resistance can be obtained.

Further, the lignin derivative in the present invention preferably has a number average molecular weight of 200 to 5000, and more preferably, 300 to 3000, expressed in terms of polystyrene, determined by gel permeation chromatography. The lignin derivative having such a number average molecular weight has good reactivity (curability) with the modified novolac type phenol resin (B), the cashew resin (B'), and the unmodified novolac type phenol resin (B"), and moreover, has excellent strength after molding after being formed into a resin composition.

The following describes an exemplary method for measuring a molecular weight by the gel permeation chromatography.

The lignin derivative in the present invention is dissolved in a solvent, whereby a measurement sample is prepared. The solvent used herein is not particularly limited, and may be any one as long as the lignin derivative can be dissolved therein. From the viewpoint of the measurement accuracy of gel permeation chromatography, for example, tetrahydrofuran is preferable.

Next, "TSKgelGMHXL (manufactured by Tosoh Corporation)", which is an organic generic column filled with a styrene-based polymer filler, and "G2000HXL (manufactured by Tosoh Corporation)", are connected in series to a GPC system "HLC-8320GPC (manufactured by Tosoh Corporation)".

Into this GPC system, 200 µL of the above-described measurement sample is charged, and at 40°C, tetrahydrofuran as an eluent is expanded at a rate of 1.0 mL/min, so that a retention time is measured by using a differential refractive index (RI) and an ultraviolet absorbance (UV). From a calibration curve, prepared separately, indicating the relationship between a standard polystyrene retention time and a molecular weight, the number average molecular weight of the lignin derivative can be calculated.

The molecular weight of standard polystyrene used for creating the calibration curve is not particularly limited, and a standard polystyrenes (manufactured by Tosoh Corporation) having a number average molecular weight of 427000, 190000, 96400, 37900, 18100, 10200, 5970, 2630, 1050, or 500, for example, can be used.

Further, the lignin derivative in the present invention preferably has a carboxyl group. In the case where the lignin derivative has the above-described carboxyl group, the carboxyl group is crosslinked with a crosslinking agent described below in some cases, which causes the number of crosslinking points to increase, thereby causing the crosslinking density to improve, which results in excellent solvent resistance. Besides, the carboxyl group works as a catalyst of a crosslinking agent in some cases, and is therefore capable of promoting the crosslinking reaction between the lignin derivative and the crosslinking agent, which results in excellent solvent resistance and excellent curing rate.

In the case where the above-described lignin derivative has a carboxyl group, the carboxyl group can be confirmed, when the lignin derivative is subjected to ¹³C-NMR analysis attributing to the carboxyl group, by the presence/absence of peak of absorption in a range of 172 to 174 ppm.

The lignin derivative of the present invention preferably has a softening point of 80°C to 160°C, more preferably 85°C to 150°C, and further preferably 90°C to 130°C. If the softening point is below 80°C, the lignin derivative has too high hot melt properties and fluidity, which causes many burrs to occur upon molding, and further, the lignin derivative has poor handleability in a case where it is formed into a resin composition and a rubber composition; as a result, much loss occurs at the time of manufacture in some cases. Furthermore, if the softening point is above 160°C, the lignin derivative has poor hot melt properties and poor fluidity, and cannot be molded in some cases. The softening point can be changed by controlling the volatile component amount within a certain range, controlling the average molecular weight of the lignin derivative depending on the decomposition temperature of the biomass, and replacing a part of the lignin derivative with other resin components.

The method for measuring the softening point was in accordance with JIS K2207, in which a ring and ball softening point tester (manufactured by Meltec Corporation, ASP-MG2 type) was used.

In a case where the lignin derivative obtained by decomposing a biomass is used as a resin composition of the present invention, a lot of low-molecular-weight components are mixed therein in some cases, which causes generation of volatile matters and odor upon heating, as well as lowering of the softening point in some cases. These, however, can be removed by heating, drying, etc. of the lignin derivative, whereby the softening point and the odor thereof can be controlled.

### <Modified novolac type phenol resin (B) and unmodified novolac type phenol resin (B")>

In the present invention, the "modified novolac type phenol resin (B)" refers to a novolac resin modified with an aromatic structure containing compound or a cyclic alkyl structure containing compound (hereinafter referred to as a "modified novolac resin").

To be more specific, non-limited specific examples of the modified novolac resin include at least one selected from the group consisting of: (1) novolac resins on which any of phenols, aldehydes, and modified compound is caused to react; (2) novolac resins on which at least different two of phenols and aldehydes are caused to react; and (3) novolac resins on which any of phenols and aldehydes other than phenol is caused to react.

In the present invention, the "unmodified novolac type phenol resin (B")" refers to a novolac type phenol resin that is not modified. Specific examples of the unmodified novolac type phenol resin include reaction products obtained by causing phenol or cresol, and formaldehyde or paraformaldehyde, to react with each other.

The above-described phenols include, more specifically, phenols and alkyl phenols, examples of which include: cresols such as o-cresol, m-cresol, and p-cresol; ethyl phenols such as o-ethyl phenol, m-ethyl phenol, and p-ethyl phenol; butyl phenols such as isopropyl phenol, butyl phenol, and p-tert-butyl phenol; and, long chain alkyl phenols such as p-tert-amylphenol, p-octyl phenol, p-nonyl phenol, and p-cumylphenol. These can be used alone or in combination of two or more.

In one or a plurality of embodiments, examples of the above-described aldehyde include: formaldehyde, paraformaldehyde, trioxane, acetaldehyde, propionaldehyde, polyoxymethylene, chloral, hexamethylenetetramine, furfural, glyoxal, n-butyl aldehyde, caproaldehyde, allyl aldehyde, benzaldehyde, crotonaldehyde, acrolein, tetraoxymethylene, phenyl acetaldehyde, o-tolualdehyde, salicylaldehyde, and paraxylene dimethyl ether. Preferable are formaldehyde, paraformaldehyde, trioxane, polyoxymethylene, acetaldehyde, paraxylene dimethyl ether, saccharides, starch derivatives, and combinations of these. These can be used alone or in combination of two or more.

The above-described "modified compound" more specifically refers to: compounds having an aromatic structure, such as catechol, pyrogallol, bis phenol F, and bis phenol A, having two or more hydroxyl groups in the molecule; compounds having a polycyclic aromatic structure, such as naphthol having a hydroxyl group; melamine; terpenes; furan resins such as furfural; and plant-derived components such as tung oil, linseed oil, cashew oil, and tall oil.

From the viewpoint of reducing the load on the environment, the above-described modified compound is preferably a plant-derived compound, which is, more specifically, tung oil, linseed oil, tall oil, or a cashew oil that are vegetable oils. Besides, the vegetable oils, including aliphatic acids and rosin-based compounds having long chain alkyl groups, have excellent compatibility with rubber when being formulated with rubber. Similarly, since the cashew oils include cardanol and cardol as phenol compounds having a long chain alkenyl group, when being used as a modifying agent of a phenol resin, a phenol resin in which a long chain alkyl group or alkenyl group exists can be obtained. When being formulated with rubber, the cashew oil has excellent compatibility with rubber, and exhibits effects of improving the modulus of elasticity, and the like.

The cashew oil is obtained by heating extraction from cashewnut, and both of raw and purified cashew oils can be used as the cashew oil used in the present invention.

Commercially available cashew oil and industrial cashew oil are decarboxylated in many cases, but they can be used irrespective of being decarboxylated or not.

Further, as the cashew oil, cardanol or cardol obtained by distilling cashew oil can be used, or these components can be used alone or in combination. This case is also encompassed in the present invention.

Next, a method for producing the modified novolac resin used in the composition of the present invention is described.

### <Method for producing modified novolac resin>

The method for producing the above-described modified novolac resin is not limited particularly, and examples of the same include: a method of charging a phenol, a vegetable oil, and an acid catalyst in a reaction device, and causing the same to react while sequentially adding an aldehyde under reflux conditions; and a method of charging an unmodified novolac resin and an acid catalyst in a reaction device, and causing the same to react while sequentially adding a vegetable oil under reflux conditions.

The reaction molar ratio (F/P) between a phenol (P) and an aldehyde (F) when a modified novolac resin is manufactured is not limited particularly, but it is preferably 0.3 to 1.5, and particularly preferably 0.6 to 0.9. If the reaction molar ratio is less than the above-described lower limit value, a solid resin cannot be obtained in some cases, and if it is more than the above-described upper limit value, gelation occurs depending on the reaction conditions.

Regarding the above-described modified novolac resin, the ratio of modification due to the vegetable oil is not limited particularly, but vegetable oil is preferably used at a ratio of 10% to 70% by weight, more preferably 20% to 50% by weight, and further preferably 30% to 45% by weight, with respect to the entirety of the modified novolac resin.

If the modification ratio is less than the above-described lower limit value, the effects of modification by the vegetable oil are not expressed sufficiently in some cases. On the other hand, if the modification ratio is more than the above-described upper limit value, the modified novolac resin becomes difficult to be solidified, thereby having poor handleability, and the reaction thereof becomes difficult to be controlled, whereby a gelated product is generated, in some cases.

The acid catalyst used when the modified novolac resin is synthesized is not limited particularly, but examples of the same include inorganic acids such as hydrochloric acid, sulfuric acid, phosphoric acid, and phosphorous acid; organic acids such as oxalic acid, diethyl sulfuric acid, para-toluenesulfonic acid, and organic phosphonic acid; and metal salts such as zinc acetate. These can be used alone or in combination of two or more.

Among these, the following are preferred: oxalic acid; sulfuric acid-based or sulfonic acid-based substances such as sulfuric acid, diethyl sulfuric acid, and para-toluenesulfonic acid; and phosphoric acid-based substances such as phosphoric acid and phosphorous acid. Further, among these, oxalic acid, or a sulfuric acid-based or sulfonic acid-based substance is preferably used.

The amount of the acid catalyst added is not limited particularly, but preferably, the amount is in a range of 0.05 to 5 parts by weight, and particularly preferably 0.1 to 2 parts by weight, with respect to 100 parts by weight of a phenol.

If the amount of the acid catalyst added is less than the lower limit value, the reaction does not sufficiently proceed in some cases. On the other hand, if the amount of the same exceeds the upper limit value, a gelated product is generated in some cases depending on the reaction conditions, as is in the above-described case where the reaction molar ratio is high.

When the modified novolac resin is synthesized, a reaction solvent can be used. This reaction solvent is not limited particularly, and water, an organic solvent, or the like can be used, among which water is typically used. Alternatively, paraformaldehyde may be used as an aldehyde, without use of the reaction solvent. Examples of the organic solvent include: alcohols such as methanol, ethanol, propanol, butanol, and amyl alcohol; ketones such as acetone, and methyl ethyl ketone; glycols such as ethylene glycol, diethylene glycol, triethylene glycol, and glycerol; glycolethers such as ethylene glycolmonomethyl ether, ethylene glycolmonoethyl ether, diethylene glycolmonomethyl ether, and triethylene glycolmonomethyl ether; ethers such as 1,4-dioxane; and aromatics such as toluene, and xylene. These can be used alone or in combination of two or more.

The molecular weight of the modified novolac resin is not limited particularly. The modified novolac resin, however, preferably has a number average molecular weight of 400 to 5000, and more preferably 500 to 3000. If the number average molecular weight is within the above-described range, the resin has good handleability. If the number average molecular weight is below the above-described lower limit value, handleability decreases in some cases; for example, a viscous substance having a high viscosity is obtained, or a substance that, even though solidified, tends to cake during storage in summer is obtained. Besides, if the number average molecular weight exceeds the above-described upper limit value, a substance that is hardly dissolved in a solvent, or has poorer compatibility with a substance to be formulated with, is obtained in some cases.

The above-described number average molecular weight can be analyzed by using a method identical to that for the lignin derivative.

The form of the modified novolac resin used in the resin composition of the present invention is not limited particularly; the form that can be thought of is a micropowder form, or alternatively, a granular form, a pellet form, or a vanish form. From the viewpoint of handleability when it is kneaded into a rubber, that in a granular form or a pellet form is preferably used.

### <Cashew resin (B')>

In the present invention, examples of the cashew resin (B') include: cashew oil that is a natural product that contains cardanol and cardol having an unsaturated double bond in a side chain thereof, and polymerization products thereof; and polymerization products obtained by causing the same to react with aldehydes or saccharides. In one or a plurality of embodiments, the cashew resin (B') is, for example, a cashew; a polymerization product of a cashew; or a cashew and an aldehyde.

### <Resin composition>

The resin composition of the present invention is characterized in containing: the lignin derivative (A); and at least one selected from the group consisting of the modified novolac type phenol resin (B) and the cashew resin (B'). The resin composition, however, may contain, other than these, a filler (C), a crosslinking agent, and the like, to be described below.

The method for producing the resin composition according to the present invention includes the step of kneading the lignin derivative and the modified novolac. Additionally, the method may include a step of premixing an arbitrary component and thereafter performing kneading, as required. Further, in a case where a filler, a crosslinking agent, an anti-aging agent, and other additives are contained, the order in which these are subjected to kneading is not limited in particular. Examples of the kneading machine include a Banbury mixer, a kneader, and a roller mill.

Upon kneading, an organic solvent may be used as required. The organic solvent is not limited particularly, and examples of the same include methanol, ethanol, propanol, butanol, methyl cellosolve, acetone, methyl ethyl ketone, methyl isobutyl ketone, N,N-dimethyl formamide, N,N-dimethylacetamide, N-methyl-2-pyrrolidone, quinoline, cyclopentanone, m-cresol, and chloroform. One of these or a mixture of two or more of these is used. The concentration of a solid component in the resin composition is not limited particularly, but as one example, the concentration is about 60 to 98 mass%, and preferably about 70 to 95 mass%.

In order to knead the modified novolac resin and lignin, the kneading may be performed in the above-described manner, but alternatively the following manner may be applied: lignin is charged into a reactor after the modified novolac resin is obtained by reaction, and is subjected to melt-kneading; or, in a case where lignin is obtained by decomposition of a biomass, the modified novolac resin is charged into a reactor after decomposition, and is subjected to melt-kneading.

In one example of the producing method, a lignin resin and a modified novolac are mixed by a heat plate, or a mixing machine such as a mixer or a roller mill, so as to be obtained as a mixture resin.

### <Rubber composition>

The resin composition according to the present invention can be used as a rubber composition. In this case, the rubber composition is characterized by containing: the above-described lignin derivative (A); at least one selected from the group consisting of the modified novolac type phenol resin (B), the cashew resin (B'), and the unmodified novolac type phenol resin (B"); and a natural rubber compound or diene-based synthetic rubber compound (D).

### <Natural rubber compound or diene-based synthetic rubber compound (D)>

Examples of a rubber component that can be used in the present invention include natural rubber (NR), modified natural rubber, styrene butadiene rubber (SBR), butadiene rubber (BR), isoprene rubber (IR), butyl rubber (IIR), ethylene propylene diene rubber (EPDM), acrylonitrile butadiene rubber (NBR), and chloroprene rubber (CR). These may be used alone or two or more may be mixed and used. As having excellent properties regarding resistance to scratches, abrasion resistance, fatigue resistance, flexing crack growth resistance, and the like, one or more types of rubbers among natural rubber (NR), modified natural rubber, styrene butadiene rubber (SBR) and butadiene rubber (BR) are preferable, and further, from the viewpoint of availability, natural rubber and/or butadiene rubber (BR) are more preferable.

In a case where styrene butadiene rubber (SBR) and/or butadiene rubber (BR) are formulated, the content of SBR and/or BR is preferably 50 mass% or less in the rubber component, and is more preferably 30 mass% or less. In a case where the content of SBR and/or BR is 50 mass% or less, it is possible to control the petroleum resources ratio in the rubber component to a low level, thereby further reducing the load on the environment.

The rubber component of the present invention may contain a functional-group-containing natural rubber (modified natural rubber) and/or a functional-group-containing diene-based rubber that includes at least one selected from the following functional groups: alkoxyl group, alkoxysilyl group, epoxy group, glycidyl group, carbonyl group, ester group, hydroxy group, amino group, and silanol group. In the case where natural rubber and/or diene-based rubber includes these functional groups, the functional groups react with surfaces of the filler (C) such as silica or carbon black, or mutually act with each other, thereby improving the dispersion properties of the filler (C).

In a case where a functional-group-containing natural rubber (modified natural rubber) and/or a functional-group-containing diene-based rubber is included, preferably, at least one functional group selected from alkoxyl group, alkoxysilyl group, epoxy group, glycidyl group, carbonyl group, ester group, hydroxy group, amino group, and silanol group is included at a ratio in a range of 0.001 to 80 mol% in the functional-group-containing natural rubber or the functional-group-containing diene-based rubber. If the content of the functional group is equal to or more than 0.001 mol%, the above-described effect of reacting with surfaces of silica or carbon black or mutually acting with each other is obtained excellently, and if the content is equal to or less than 80 mol%, an increase in the viscosity of the unvulcanized rubber composition at the time of manufacture is suppressed, whereby the processability is improved. The content of such a functional group is preferably in a range of 0.01 to 50 mol%, and further preferably in a range of 0.02 to 25 mol%.

As a method for causing natural rubber and/or diene-based rubber to contain at least one functional group selected from alkoxyl group, alkoxysilyl group, epoxy group, glycidyl group, carbonyl group, ester group, hydroxy group, amino group, and silanol group, for example, the following method can be used: a method of introducing a functional group to a polymerization terminal of a styrene-butadiene copolymer, which is polymerized in a hydrocarbon solvent by using an organic lithium initiator; and a method of epoxidizing a natural rubber or a diene-based rubber by the chlorohydrin method, the direct oxidation method, the hydrogen peroxide method, the alkyl hydroperoxide method, or the like.

The rubber composition of the present invention preferably contains natural rubber and/or modified natural rubber, or styrene butadiene rubber (SBR), butadiene rubber (BR), so that the content thereof in the rubber component is in a range of 50 to 100 mass%.

In a case where the above-described content is 50 mass% or more, the effects of improving E' (storage elastic modulus) and the effect of reducing tanδ around 60°C are exhibited particularly remarkably.

It is preferable that natural rubber and/or modified natural rubber account for 100 mass% of the rubber component, since in this case the load on the environment is small. When, however, further higher abrasion resistance or flexing crack growth resistance is needed, the other rubbers such as the above-described styrene butadiene rubber (SBR) and butadiene rubber (BR) may be combined; this is convenient from the viewpoint that performances thereof can be adjusted.

The content of the rubber compound (B) is not particularly limited, but the content is preferably equal to or more than 100 parts by weight, and equal to or less than 10000 parts by mass, more preferably equal to or more than 200 parts by weight and equal to or less than 5000 parts by mass, and further more preferably equal to or more than 300 parts by weight and equal to or less than 2000 parts by mass, with respect to 100 parts by mass in total of the lignin derivative (A) and the modified novolac type phenol resin (B). In a case where the content of the rubber compound (B) is too small, the hardness increases too much, which results in decrease of elongation at break. In a case where the content is too much, the effect of reinforcement decreases.

### (Filler (C))

Next, the filler (C) is described.

In the present invention, additionally, the filler (C) may be used.

As the filler (C), those typically used in the resin composition or the rubber composition can be used. As the filler (C), preferably a filler that contains one or more selected from the group consisting of at least carbon black, silica, alumina, and cellulose fiber is used, and particularly preferably an inorganic filler is used. Particularly, the filler preferably contains at least one selected from silica and carbon black. When silica is used, an excellent effect of reducing tanδ is achieved, and particularly in a case where the resin composition of the present invention and silica are used in combination, the effect of improving E' (storage elastic modulus) and the effect of reducing tanδ around 60°C become particularly excellent.

The content of the filler (C) is preferably in a range of 10 to 150 parts by mass with respect to 100 parts by mass of the rubber component. In a case where the content of the filler (C) is equal to or more than 10 parts by mass, a good effect of improving E' (storage elastic modulus) of a rubber composition for tire is achieved, and in a case where the content is equal to or less than 150 parts by mass, there is less risk that E' (storage elastic modulus) would excessively rise, and the processability of the rubber composition during preparation is good, while there is less risk that the degradation of dispersion properties of the filler (C) in the rubber composition would lead to degradation of the abrasion resistance and the elongation at break, etc., as well as unnecessary increase of tanδ around 70°C and deterioration of fuel efficiency caused by the same.

In a case where silica is formulated as the filler (C), it is preferable to formulate silica in a range of 10 to 150 parts by mass with respect to 100 parts by mass of the rubber component, and to formulate a silane coupling agent in a range of 1 to 20 mass% with respect to the content of the silica. In a case where, in a rubber composition for tire, the content of silica with respect to 100 parts by mass of the rubber component is equal to or more than 10 parts by mass, the effect of improving E' (storage elastic modulus) of the rubber composition for tire is good, and in a case where it is equal to or less than 150 parts by mass, there is less risk that E' (storage elastic modulus) would excessively rise, and the processability of the rubber composition for tire during preparation is good. Besides, risk can be reduced that the degradation of dispersion properties of silica in the rubber composition would lead to degradation of the abrasion resistance and the elongation at break, as well as unnecessary increase of tanδ around 70°C and deterioration of fuel efficiency caused by the same. The content of silica is further preferably equal to or more than 20 parts by mass, and still further preferably equal to or more than 30 parts by mass, while it is further preferably equal to or less than 100 parts by mass, and still further preferably equal to or less than 80 parts by mass.

As silica, those that have been used conventionally for reinforcement of rubber can be used, and any may be selected appropriately from, for example, dry silica, wet silica, and colloidal silica. Particularly, silica having a nitrogen adsorption specific surface area (N2SA) preferably in a range of 20 to 600 m²/g, further preferably in a range of 40 to 500 m²/g, and still further preferably in a range of 50 to 450 m²/g, is used. In a case where silica has N2SA equal to or more than 20 m²/g, the silica is preferable in the point that it has a great effect of reinforcement with respect to the rubber composition for tire. In a case where silica has N2SA equal to or less than 600 m²/g, the dispersion properties of the silica in the rubber composition for tire is good, and the silica is preferable in the point that it is possible to prevent increase of heat generation property (fuel consumption property) during use of a pneumatic tire in which the rubber composition is used.

Further, the rubber composition of the present invention can contain a filler (C) other than those described above, depending on the purpose of use. In the case where a filler (C) is added, examples of the filler (C) include inorganic fillers such as powders and fiber fragments. Examples of the powder as the filler (C) include powder of the following materials: silicates such as talc, baked clay, unbaked clay, mica, and glass; oxides such as titanium oxide, and alumina; carbonates such as magnesium silicate, calcium carbonate, magnesium carbonate, and hydrotalcite; oxides such as zinc oxide, and magnesium oxide; hydroxides such as aluminum hydroxide, magnesium hydroxide, and calcium hydroxide; sulfates or sulfites such as barium sulfate, calcium sulfate, and calcium sulfite; borates such as zinc borate, barium metaborate, aluminum borate, calcium borate, and sodium borate; nitrides such as aluminum nitride, boron nitride, and silicon nitride. Examples of the fiber fragments as the filler (C) include fiber fragments such as glass fiber and carbon fiber. Other than these, the examples of the filler (C) include organic fillers such as wood flour, pulp pulverized powder, cellulose fiber, cloth pulverized powder, thermosetting resin cured product powder, aramid fiber, and talc.

Further, in the case where the rubber component contains an epoxidized natural rubber, this is preferable in the point that silica and the rubber component easily act on each other.

### (Crosslinking agent)

Next, the crosslinking agent is described.

To the rubber composition of the present invention, a crosslinking agent can be added as required. In the case where a crosslinking agent is added, the crosslinking agent is not limited particularly, as long as it is a crosslinking agent that can be crosslinked with the lignin derivative (A) or at least one selected from the group consisting of the modified novolac type phenol resin (B), the cashew resin (B'), and the unmodified novolac type phenol resin (B"), or alternatively, a crosslinking agent that can be crosslinked with both of the same, Those containing compounds represented by Formula (4) shown below are preferable.

Z-(CH₂OR)ₙ, (4)

where Z represents one of melamine residue, urea residue, glycolyl residue, imidazolidinone residue, and aromatic ring residue; m represents an integer of 2 to 14;
and R independently represents an alkyl group having 1 to 4 carbon atoms or a hydrogen atom. It should be noted that -CH₂OR is directly coupled with any of nitrogen atom of melamine residue, nitrogen atom of primary amino group of urea residue, nitrogen atom of secondary amino group of glycolyl residue, nitrogen atom of secondary amino group of imidazolidinone residue, and carbon atom of aromatic ring of aromatic ring residue.

The rubber composition containing such a compound has excellent mechanical properties after curing, and contributes to the improvement of durability and appearance of a cured article. This is because the compound contained in the crosslinking agent, which is represented by Formula (4) described above, is capable of forming polyfunctional crosslinking points, which allows the lignin derivative (A) to be crosslinked at a high density and uniformly, thereby causing a homogeneous and rigid skeleton to be formed. With the rigid skeleton, the mechanical properties and durability (including resistance to boiling, etc.) of the cured article are improved, and at the same time, occurrence of swellings, cracks, and the like is suppressed, whereby the appearance of the cured article is also improved.

Further, as described above, -CH₂OR is directly coupled with any one of nitrogen atom of melamine residue, nitrogen atom of primary amino group of urea residue, nitrogen atom of secondary amino group of glycolyl residue, nitrogen atom of secondary amino group of imidazolidinone residue, and carbon atom of aromatic ring of aromatic ring residue, and in a case where two or more "-CH₂OR"s are coupled with one nitrogen atom or carbon atom, "R" included in at least one of the "-CH₂OR"s is preferably an alkyl group. This allows the lignin derivative (A) to be surely crosslinked.

In the present description, the "melamine residue" refers to a group having a melamine skeleton represented by Formula (A) shown below.

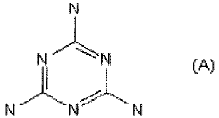

Further, in the present description, the "urea residue" refers to a group having an urea skeleton represented by Formula (B) shown below.

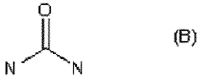

Further, in the present description, the "glycolyl residue" refers to a group having a glycolyl skeleton represented by Formula (C) shown below.

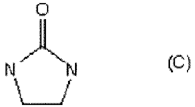

Further, in the present description, the "imidazolidinone residue" refers to a group having an imidazolidinone skeleton represented by Formula (D) shown below.

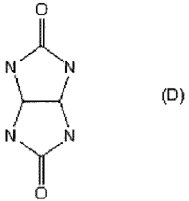

Further, in the present description, the "aromatic ring residue" refers to a group having an aromatic ring (benzene ring).

Further, as the compound represented by Formula (4) shown above, particularly the compound represented by any one of Formulae (5) to (8) shown below is preferably used. These react with respect to crosslinking reaction points on an aromatic ring included in the phenol skeleton in the lignin derivative (A), thereby surely crosslinking the lignin derivative (A), and at the same time, causes self-crosslinking due to a self-condensation reaction between functional groups. Consequently, a cured article that has a particularly homogeneous and rigid skeleton, and that has excellent mechanical properties, durability, and appearance is obtained. 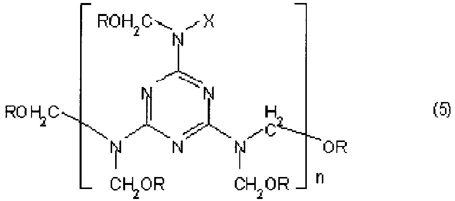 where X represents CH₂OR or a hydrogen atom; R independently represents an alkyl group having 1 to 4 carbon atoms or a hydrogen atom; and n represents an integer of 1 to 3. 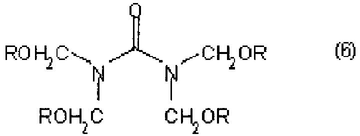 where R independently represents an alkyl group having 1 to 4 carbon atoms or a hydrogen atom. 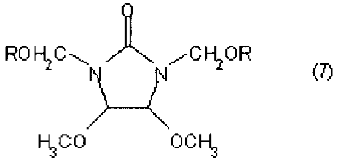 where R independently represents an alkyl group having 1 to 4 carbon atoms or a hydrogen atom. 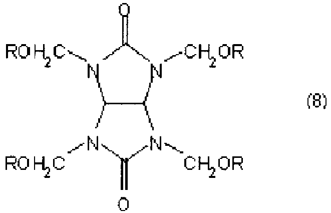 where R independently represents an alkyl group having 1 to 4 carbon atoms or a hydrogen atom.

Further, as the compound represented by Formula (5) shown above, particularly the compound represented by either Formula (9) or Formula (10) shown below is preferably used. These react with respect to crosslinking reaction points on an aromatic ring included in the phenol skeleton in the lignin derivative, thereby particularly surely crosslinking the lignin derivative, and at the same time, causes self-crosslinking due to a self-condensation reaction between functional groups. Consequently, a cured article that has an especially homogeneous and rigid skeleton, and that has excellent mechanical properties, durability, and appearance is obtained. 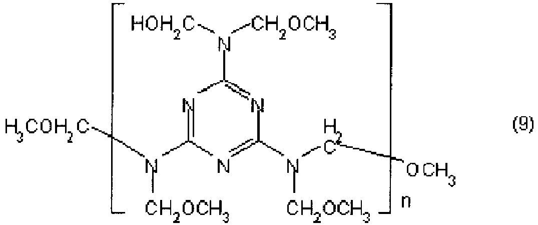 where n represents an integer of 1 to 3. 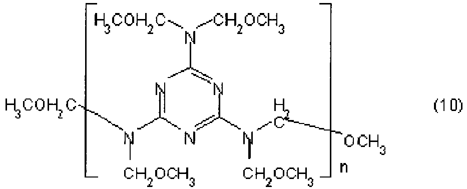 where n represents an integer of 1 to 3.

Further, the above-described crosslinking agent may contain, in place of the compound represented by Formula (4), or together with this compound, at least one compound of hexamethylene tetramine, quinuclidine, and pidine. A cured article containing such a crosslinking agent has an excellent mechanical strength, and high durability and appearance. This is because hexamethylene tetramine, quinuclidine, and pidine crosslink the lignin derivative (A) at a high density and uniformly, thereby forming a homogeneous and rigid skeleton.

Further, the crosslinking agent may contain a crosslinking agent component other than the above-described compounds. Examples of the crosslinking agent component other than the above-described compounds include: epoxy resins such as orthocresol novolac type epoxy resin, bisphenol A type epoxy resin, epoxidized glycerol, epoxidized linseed oil, and epoxidized soybean oil; and isocyanate compounds such as hexamethylene diisocyanate, and toluene diisocyanate. Examples of the crosslinking agent component other than the above-described compounds include, as compounds that can be crosslinked with respect to an aromatic ring of a lignin derivative by electrophilic substitution; aldehydes such as formaldehyde, acetaldehyde, paraformaldehyde, and furfural; aldehyde sources such as polyoxymethylene; crosslinking agents that are normal phenol resins and are known, such as resol-type phenol resin; and compounds that can be crosslinked with respect to an aromatic ring of a lignin derivative by electrophilic substitution. The content of the above-described compound in the crosslinking agent is preferably equal to or more than 80 mass% before crosslinking. Further, the compound is preferably in a range of 5 to 120 parts by mass, and more preferably in a range of 10 to 100 parts by mass, with respect to 100 parts by mass of the lignin derivative (A).

### <Other components>

In the rubber composition of the present invention, additives are appropriately formulated as required in addition to the rubber component, the resin composition and the filler (C) of the present invention. Examples of the additives include: a softener, a tackifier, an antioxidant, an ozone deterioration inhibitor, an anti-aging agent, sulfur and other vulcanizing agents, a vulcanization promoter, a vulcanization auxiliary, a peroxide, zinc oxide, and stearic acid.

As a vulcanizing agent, an organic peroxide or a sulfur-based vulcanizing agent can be used. As the organic peroxide, the following can be used: benzoyl peroxide, dicumyl peroxide, di-t-butyl peroxide, t-butyl cumyl peroxide, methyl ethyl ketone peroxide, cumene hydroperoxide, 2,5-dimethyl -2,5-di(t-butyl peroxy)hexane, 2,5-dimethyl -2,5-di(benzoyl peroxy)hexane , 2,5-dimethyl -2,5-di(t-butyl peroxy)hexyne-3, or 1,3-bis (t-butyl peroxy propyl)benzene. Further, as the sulfur-based vulcanizing agent, for example, sulfur, or morpholine disulfide can be used. Among these, sulfur is preferable.

As the vulcanization promoter, a vulcanization promoter containing at least one of the following can be used: sulfenamide-based, thiazole-based, thiuram-based, thiourea-based, guanidine-based, dithiocarbamic acid-based, aldehyde-amine-based or aldehyde-ammonium-based, imidazoline-based, or xanthate-based vulcanization promoters.

As the anti-aging agent, an appropriate one can be selected and used from amine-based, phenol-based, and imidazol-based compounds, carbamic acid metal salts, and waxes.

In the rubber composition of the present invention, a compounding agent normally used in rubber industries, such as stearic acid, and zinc oxide, can be appropriately formulated in addition.

### <Method for producing rubber composition>

The producing method of the present invention includes the step of kneading raw material rubber, lignin, and modified novolac, which are essential components. The raw material rubber and arbitrary components may be premixed and thereafter kneaded as required. In a case where a filler, a crosslinking agent, a vulcanizing agent, a vulcanization promoter, an anti-aging agent, and other additives are contained as well, the order of kneading of the additives is not particularly limited.

Here, examples of the kneading machine include a Banbury mixer, a kneader, and a roller mill.

In kneading, an organic solvent may be used as required. The organic solvent is not limited particularly, and examples of the same include methanol, ethanol, propanol, butanol, methyl cellosolve, acetone, methyl ethyl ketone, methyl isobutyl ketone, N,N-dimethyl formamide, N,N-dimethylacetamide, N-methyl-2-pyrrolidone, quinoline, cyclopentanone, m-cresol, and chloroform. One of these or a mixture of two or more of these is used. Further, the concentration of the solid component in the rubber composition is not particularly limited, but as an example, the concentration is about 60 to 98 mass%, and preferably about 70 to 95 mass%.

In order to knead the modified novolac resin and lignin, the kneading may be performed in the above-described manner, but the following manner may be applied: lignin is charged into a reactor after the modified novolac resin is obtained by reaction, and is subjected to melt-kneading; or, in a case where lignin is obtained by decomposition of a biomass, the modified novolac resin is charged into a reactor after decomposition, and is subjected to melt-kneading.

One example of the producing method is described below.
(1) Mixing a lignin resin, and at least one selected from the group consisting of a modified novolac resin, a cashew resin, and an unmodified novolac type phenol resin, with a mixing machine such as a heat plate, a mixer, or a roller mill, so as to obtain a mixed resin.
(2) Kneading a raw material rubber, the mixed resin, and an arbitrary component (except for a vulcanizing agent and a vulcanization promoter) by a closed type kneading machine such as a Banbury mixer, so as to obtain a rubber composition containing no vulcanizing substance. Here, knead conditions (temperature, time) are different depending on the kneading machine used.
(3) Adding a vulcanizing agent and a vulcanization promoter to the rubber composition obtained in (2) above, using a roller mill such as an open roll or the above-described kneading machine, and again kneading the same, so as to obtain a rubber composition containing a vulcanizing substance.

### <Method for producing rubber composition cured article>

Next, steps for obtaining a rubber composition cured article are described. The cured article of the rubber composition can be obtained by molding the rubber composition. The molding method is not particularly limited, since it is different depending on the purpose of use, but in a case where the molding is performed with use of a mold, the rubber composition produced is molded with use of a mold equipped with a hydraulic press, whereby a rubber composition cured article is obtained.

In a case where the rubber composition of the present invention is used for forming a tire, the rubber composition is used as a rubber composition for tire that has a low tanδ (loss tangent) around 60°C and improved E' (storage elastic modulus), and that is capable of reducing the load on the environment, and therefore an pneumatic tire formed with the foregoing rubber composition for tire has improved operation stability without increase in rolling resistance.

As mentioned above, the rubber composition of the present invention can be used for forming a tire, as an example. In a case where the rubber composition of the present invention is used for tire tread, the production of the same is performed in a normal manner. More specifically, the rubber composition, in an unvulcanization stage, is formed into a shape of a tire tread part by extrusion, and is bonded in a normal manner on a tire molding machine, whereby an unvulcanized tire is molded. The unvulcanized tire is heated and pressurized in a vulcanizing machine, whereby a tire is obtained.

The temperature for molding is preferably about 100°C to 280°C, more preferably about 120°C to 250°C, further more preferably about 130°C to 230°C. In a case where the temperature for molding is above 230°C, there is a risk of deterioration of rubber, and in a case where the temperature is below 100°C, there is a risk that molding cannot be achieved.

### Example

Hereinafter, the present invention is described in more detail with reference to examples.

"Part(s)" described below refers to "part(s) by weight", and "%" described below refers to "% by weight".

The following description describes various types of raw materials used in the examples and the comparative examples.
Natural rubber: manufactured by Touchi Co., Ltd., RSS3
Curing agent: hexamethylenetetramine
Carbon black: manufactured by Mitsubishi Chemical Corporation, HAF
Silica: manufactured by Evonik Industries AG, Ultrasil VN3 (BET specific surface area: 175 m²/g)
Silane coupling agent: manufactured by Evonik Industries AG, Si-69
Zinc oxide: manufactured by Sakai Chemical Industry Co., Ltd.
Stearic acid: manufactured by NOF Corporation, bead stearic acid YR
Sulfur: manufactured by Hosoi Chemical Industry Co., Ltd., fine powder sulfur
Vulcanization promoter: manufactured by Ouchi Shinko Chemical Industrial Co., Ltd., MSA-G
Phenol resin: manufactured by Sumitomo Bakelite Co., Ltd., PR-50731
Cashew modified novolac type phenol resin: manufactured by Sumitomo Bakelite Co., Ltd., PR-12686
Tall modified novolac type phenol resin: manufactured by Sumitomo Bakelite Co., Ltd., PR-13349

### (Example 1)

### (1) Extraction of lignin derivative

100 parts of cedar wood flour (finer than 60 mesh), and 400 parts of solvent composed of pure water were mixed, and introduced into 1L-autoclave. Then, while the contents were agitated at 300 rpm, the agitation was performed at room temperature for 15 minutes as a pretreatment so that the cedar wood flour and the solvent were sufficiently mixed with each other, and thereafter the contents were treated at 300°C under 10 MPa for 60 minutes, so that the cedar wood flour was decomposed.

Next, the obtained decomposed substance was filtered, and solid components thus filtered out were collected.

Next, the obtained solid component was immersed in 250 parts of acetone for twelve hours. This was filtered, whereby acetone-soluble components were collected.

Next, acetone was distilled away from the acetone-soluble components, and the components were dried, whereby 15.2 parts of lignin derivative (A) was obtained.

### (2) Production of rubber composition

50 parts of the lignin derivative, and 50 parts of cashew modified novolac type phenol resin were molten and mixed preliminarily at 130°C on a heat plate, and pulverized, whereby a mixed resin was obtained. 10 parts of the obtained mixed resin, 500 parts of the natural rubber compound, 400 parts of carbon black, 20 parts of hexamethylenetetramine as a resin crosslinking agent, 10 parts of sulfur as a vulcanizing agent, 10 parts of zinc oxide as a vulcanization promotion auxiliary, and 15 parts of stearic acid as a mold release agent were heated to 100°C and kneaded in a Banbury mixer, whereby a rubber composition was obtained.

### (Example 2)

The production of a rubber composition in Example 2 was identical to Example 1 except that 50 parts of tall modified novolac type phenol resin was used in place of the cashew modified novolac type phenol resin.

### (Example 3)

The production of a rubber composition in Example 3 was identical to Example 1 except that in the extraction of the lignin derivative, the cedar wood flour and the solvent were mixed with each other sufficiently, and thereafter treated at 300°C under 9 MPa for 10 minutes.

### (Example 4)

The production of a rubber composition in Example 4 was identical to Example 1 except that 60 parts of the lignin derivative and 40 parts of the cashew modified novolac type phenol resin were used.

### (Example 5)

The production of a rubber composition in Example 5 was identical to Example 3 except that in the extraction of the lignin derivative, 33 mass% of water and 66 parts of phenol were used as the solvent, and in the production of the rubber composition, 75 parts of the lignin derivative and 25 parts of the cashew modified novolac type phenol resin were used.

### (Example 6)

The production of a rubber composition in Example 6 was identical to Example 1 except that in the extraction of the lignin derivative, the cedar wood flour and the solvent were mixed with each other sufficiently, and thereafter treated at 220°C under 3 MPa for 10 minutes.

### (Example 7)

The production of a rubber composition in Example 7 was identical to Example 1 except that in the extraction of the lignin derivative, water 50% + acetone 50% was used as the solvent, and the treatment was performed at 230°C under 3 MPa for 60 minutes.

### (Example 8)

The production of a rubber composition in Example 8 was identical to Example 7 except that in the extraction of the lignin derivative, the treatment was performed at 200°C under 2 MPa for 60 minutes.

### (Example 9)

The production of a rubber composition in Example 9 was identical to Example 1 except that in the extraction of the lignin derivative, rice straw was used as a raw material, and the treatment was performed at 300°C under 9 MPa for 30 minutes.

### (Example 10)

The production of a rubber composition in Example 10 was identical to Example 3 except that 280 parts of carbon black and 70 parts of silica were used as the filler (C), and further, 5 parts of the silica coupling agent was added.

### (Comparative example 1)

The natural rubber compound alone was used to produce a rubber composition.

### (Comparative example 2)

The cashew modified phenol resin and the natural rubber compound were used to produce a rubber composition.

### (Comparative example 3)

In Example 1, the novolac type phenol resin was used in place of the modified novolac type phenol resin.

### <Evaluation of rubber compositions>

To examine properties of the mixed resins obtained in Examples described above, and the phenol-based resins of the comparative examples, rubber compositions were prepared, and physical properties were evaluated.

The rubber compositions obtained in the above-described examples were vulcanized with a hydraulic press at 160°C for 20 minutes, whereby 2 mm-thick vulcanized rubber sheets were produced. Evaluation results of the same are illustrated in Table 1.

### (a) Mooney viscosity

Mooney viscosity was measured according to JIS K 6300, with a Mooney viscometer manufactured by Toyo Seiki Seisaku-Sho, Ltd.

### (b) Hardness (type D)

Hardness (type D) was measured according to JIS K 6253, with a durometer manufactured by Toyo Seiki Seisaku-Sho, Ltd.

### (c) Tensile stress at break, elongation at break

Tensile stress at break and elongation at break were measured according to JIS K6251, with a strograph manufactured by Toyo Seiki Seisaku-Sho, Ltd., at a tensile rate of 50 mm/min.

### (d) Storage elastic modulus, tanδ

Using a dynamic viscoelasticity measuring device manufactured by TA Instruments, a storage elastic modulus and a tanδ at 60°C were measured, under the conditions of dynamic strain of 2 %. The reciprocal of the tanδ of Comparative Example 1 is assumed to be 100, and values of the examples and the other comparative examples were calculated, which are shown as the results. Here, if the value of the reciprocal of the tanδ is large, it means that the tanδ of the viscoelastic properties is small, which allows heat energy generated due to cyclic deformation to be suppressed. In a case of a tire, this enables improvement of fuel efficiency.

As is clear from Table 1, the cured articles of the rubber compositions of the examples were excellent regarding the reciprocals of tanδ values, which are criteria regarding the low level of heat energy generated due to cyclic deformation. The cured articles of the same also had not low storage elastic moduli, which are criteria regarding the hardness, and further, exhibited high values of tensile stress at break and elongation at break. Particularly regarding tensile stress at break and high elongation at break, higher values were exhibited as compared with the case where modified novolac was used. According to the present invention, in which lignin and modified novolac resin are used, the above-described excellent properties can be achieved, and further, the use of novolac modified by naturally derived components enables reduction of the load on the environment.

**[Table 1]**

| | | | | Ex. 1 | Ex.2 | Ex. 3 | Ex. 4 | Ex. 5 | Ex. 6 | Ex. 7 | Ex. 8 | Ex. 9 | Ex. 10 | Comp. Ex. 1 | Comp. Ex.2 | Comp. Ex.3 |
|---|---|---|---|---|---|---|---|---|---|---|---|---|---|---|---|---|
| Raw material | Biomass | | | Cedar | Cedar | Cedar | Cedar | Cedar | Cedar | Cedar | Cedar | Rice straw | Cedar | | | Cedar |
| Decomposition treatment | Solvent | Water | mass% | 100 | 100 | 100 | 100 | 33 | 100 | 50 | 50 | 100 | 100 | | | 100 |
| | | Acetone | mass% | | | | | | | 50 | 50 | | | | | |
| | | Phenol | mass% | | | | | 66 | | | | | | | | |
| | Treatment temperature | | °C | 300 | 300 | 300 | 300 | 300 | 220 | 230 | 200 | 300 | 300 | | | 300 |
| | Treatment pressure | | MPa | 10 | 10 | 9 | 10 | 9 | 3 | 3 | 2 | 9 | 9 | | | 10 |
| | Treatment time | | min. | 60 | 30 | 10 | 60 | 10 | 10 | 60 | 60 | 30 | 10 | | | 60 |
| | Number average molecular weight | | | 390 | 410 | 420 | 390 | 720 | 590 | 560 | 820 | 400 | 420 | | | 390 |
| | Softening point | | °C | 107 | 108 | 123 | 107 | 140 | 147 | 141 | 153 | 109 | 123 | | | 107 |
| Formulation of rubber composition | Resin | Lignin derivative | parts | 50 | 50 | 50 | 60 | 75 | 50 | 50 | 50 | 50 | 50 | | | 50 |
| | | Cashew modified phenol resin | parts | 50 | | 50 | 40 | 25 | 50 | 50 | 50 | 50 | 50 | | 100 | |
| | | Tall modified phenol resin | parts | | 50 | | | | | | | | | | | |
| | | Novolac type phenol resin | parts | | | | | | | | | | | | | 50 |
| | Rubber | Natural rubber compound | parts | 500 | 500 | 500 | 500 | 500 | 500 | 500 | 500 | 500 | 500 | 500 | 500 | 500 |
| | Filler | Carbon black | parts | 350 | 350 | 350 | 350 | 350 | 350 | 350 | 350 | 350 | 280 | 350 | 350 | 350 |
| | | Silica | parts | | | | | | | | | | 70 | | | |
| | Resin crosslinking agent | Hexamethylene tetramine | parts | 10 | 10 | 10 | 10 | 10 | 10 | 10 | 10 | 10 | 10 | | 10 | 10 |
| | Vulcanizing agent | Sulfur | parts | 15 | 15 | 15 | 15 | 15 | 15 | 15 | 15 | 15 | 15 | 15 | 15 | 15 |
| | Vulcanization promoter | MSA-C | parts | 7.5 | 7.5 | 7.5 | 7.5 | 7.5 | 7.5 | 7.5 | 7.5 | 7.5 | 7.5 | 7.5 | 7.5 | 7.5 |
| | Vulcanization promotion auxiliary | Zinc oxide | parts | 25 | 25 | 25 | 25 | 25 | 25 | 25 | 25 | 25 | 25 | 25 | 25 | 25 |
| | Mold release agent | Stearic acid | parts | 10 | 10 | 10 | 10 | 10 | 10 | 10 | 10 | 10 | 10 | 10 | 10 | 10 |
| Evaluation results of rubber composition (exponential format) | Reciprocal of tanδ at 60°C | | | 115 | 106 | 118 | 108 | 117 | 114 | 114 | 114 | 115 | 122 | 100 | 112 | 108 |
| | Storage elastic modulus at 20°C | | | 700 | 750 | 740 | 650 | 730 | 690 | 750 | 750 | 700 | 690 | 100 | 950 | 630 |
| | Tensile stress at break | | | 75 | 72 | 68 | 71 | 76 | 73 | 71 | 71 | 75 | 68 | 100 | 60 | 64 |
| | Elongation at break | | | 111 | 141 | 110 | 122 | 114 | 124 | 115 | 115 | 111 | 97 | 100 | 66 | 104 |

### Industrial Applicability

The rubber composition of the present invention can be preferably used for the use that requires low heat energy generated by cyclic deformation, excellent modulus of elasticity, tensile stress at break, and elongation at break, particularly for use in a tire.

## Claims

1. A resin composition containing:
a lignin derivative (A); and
at least one selected from the group consisting of a modified novolac type phenol resin (B) and a cashew resin (B').

2. The resin composition according to claim 1,
wherein the modified novolac type phenol resin (B) has a softening point of 150°C or lower.

3. The resin composition according to claim 1 or 2,
wherein the cashew resin (B') has a softening point of 150°C or lower.

4. The resin composition according to any one of claims 1 to 3,
wherein the modified novolac type phenol resin (B) is obtained by modification with a plant-derived compound.

5. The resin composition according to any one of claims 1 to 4,
wherein the plant-derived compound contains at least one of tung oil, linseed oil, tall oil, and cashew oil.

6. The resin composition according to claim 1,
wherein the lignin derivative (A) has a number average molecular weight of 200 to 5000 expressed in terms of polystyrene, determined by gel permeation chromatography (GPC) analysis.

7. The resin composition according to claim 1 or 2,
wherein the lignin derivative (A) has a softening point of 160°C or lower.

8. A rubber composition containing:
a lignin derivative (A);
at least one selected from the group consisting of a modified novolac type phenol resin (B), a cashew resin (B'), and an unmodified novolac type phenol resin (B"); and
a natural rubber compound and/or a diene-based synthetic rubber compound (D).

9. The rubber composition according to claim 8,
wherein a content of the natural rubber and/or diene-based synthetic rubber (D) is 100 to 10000 parts by weight with respect to 100 parts by weight of the lignin derivative (A).

10. The rubber composition according to claim 8 or 9, further containing a filler (C).

11. The rubber composition according to any one of claims 8 to 10,
wherein the filler (C) contains one or more selected from the group consisting of at least carbon black, silica, alumina, and cellulose fiber.

12. A cured article obtained by curing the rubber composition according to any one of claims 8 to 11.
